(19) Europäisches Patentamt
European Patent Office
Office européen des brevets

(11) **EP 4 340 516 A1**

(12) **EUROPEAN PATENT APPLICATION**

(43) Date of publication:
**20.03.2024 Bulletin 2024/12**

(21) Application number: **23194841.5**

(22) Date of filing: **01.09.2023**

(51) International Patent Classification (IPC):
***H04W 72/543*** (2023.01)

(52) Cooperative Patent Classification (CPC):
**H04W 72/543;** H04W 72/535

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.09.2022 IN 202241052299**

(71) Applicant: **Nokia Solutions and Networks Oy
02610 Espoo (FI)**

(72) Inventors:
• **AGRAWAL, Rakshak
Bangalore (IN)**
• **KALYANASUNDARAM, Suresh
Bangalore (IN)**

(74) Representative: **Nokia EPO representatives
Nokia Technologies Oy
Karakaari 7
02610 Espoo (FI)**

(54) **APPARATUS, METHODS, AND COMPUTER PROGRAMS**

(57)    An apparatus comprises means for determining which one or more user equipment of a plurality of user equipment are to be scheduled in a scheduling round. This is based on an associated quality of service and on a time domain metric associated with a respective user equipment of the plurality of user equipment.

| S1 Determine TD metric of UEs |
| S2 –Use TD metric to prioritize UEs |
| S3 – compare the PF of each UE to the largest PF |
| S4 – Determine UEs to be scheduled based on comparison |
| S5 Determine scheduling tokens |

Fig. 6

EP 4 340 516 A1

Processed by Luminess, 75001 PARIS (FR)

**Description**

Field of the disclosure

The present disclosure relates to apparatus, methods, and computer programs and in particular but not exclusively to apparatus, methods and computer programs for scheduling of user equipment.

Background

A communication system can be seen as a facility that enables communication sessions between two or more entities such as communication devices, base stations and/or other nodes by providing carriers between the various entities involved in the communications path.

The communication system may be a wireless communication system. Examples of wireless systems comprise public land mobile networks (PLMN) operating based on radio standards such as those provided by 3GPP (Third Generation Partnership Project), satellite based communication systems and different wireless local networks, for example wireless local area networks (WLAN). The wireless systems can typically be divided into cells, and are therefore often referred to as cellular systems.

The communication system and associated devices typically operate in accordance with a given standard or specification which sets out what the various entities associated with the system are permitted to do and how that should be achieved. Communication protocols and/or parameters which shall be used for the connection are also typically defined. Examples of a standard are the so-called 5G (5$^{th}$ Generation) standards.

Summary

According to a first aspect, there is provided an apparatus comprising: means for determining which one or more user equipment of a plurality of user equipment are to be scheduled in a scheduling round, based on an associated quality of service and on a time domain metric associated with a respective user equipment of the plurality of user equipment.

The apparatus may comprise means for determining the respective time domain metric for each of the plurality of user equipment.

The time domain metric for the respective user equipment may be based on a proportional fair metric.

The proportional fair metric for the respective user equipment may be based on an instantaneous throughput for the respective user equipment and an average throughput for the respective user equipment.

The time domain metric for the respective user equipment may be based on a sum of scheduling weights associated with all bearers of that respective user equipment.

The time domain metric for the respective user equipment may be based on the sum of scheduling weights associated with the bearers of that respective user equipment, the instantaneous throughput for the respective user equipment, and the average throughput for the respective user equipment.

The means for determining which one or more user equipment of the plurality of user equipment are to be scheduled may select one of the plurality of user equipment to provide a reference against which one or more other user equipment of the plurality of user equipment are compared.

The apparatus may comprise means for selecting a user equipment of the plurality of user equipment with a largest proportional fair metric to provide the reference.

The means for determining which one or more user equipment of the plurality of user equipment are to be scheduled may compare a first value defined by a quality of service weight and the proportional fair metric of the user equipment providing the reference to a respective value defined by a quality of service weight and a proportional fair metric of a respective user equipment of the plurality of user equipment.

The means for determining which one or more user equipment of the plurality of user equipment are to be scheduled may select a respective user equipment of the plurality of user equipment to be scheduled if that respective user equipment, if not selected, is estimated to have a better time domain metric than that of the user equipment providing the reference.

The means for determining which one or more user equipment of the plurality of user equipment are to be scheduled may select respective user equipment of the plurality of user equipment to be scheduled if that respective user equipment, if not selected, would have a better time domain metric than an average time metric of the selected user equipment of the plurality of user equipment.

The apparatus may comprise means for determining a number of scheduling tokens for each of the user equipment which are to be scheduled in the scheduling round based on the respective time domain metric for the respective user equipment and the time domain metrics of all the user equipment which are to be scheduled in the scheduling round.

The apparatus may be provided in or by a base station.

According to a second aspect, there is provided an apparatus comprising: circuitry configured to: determine which one or more user equipment of a plurality of user equipment are to be scheduled in a scheduling round, based on an associated quality of service and on a time domain metric associated with a respective user equipment of the plurality of user equipment.

The circuitry may be configured to determine the respective time domain metric for each of the plurality of user equipment.

The time domain metric for the respective user equipment may be based on a proportional fair metric.

The proportional fair metric for the respective user equipment may be based on an instantaneous throughput for the respective user equipment and an average throughput for the respective user equipment.

The time domain metric for the respective user equipment may be based on a sum of scheduling weights associated with all bearers of that respective user equipment.

The time domain metric for the respective user equipment may be based on the sum of scheduling weights associated with the bearers of that respective user equipment, the instantaneous throughput for the respective user equipment, and the average throughput for the respective user equipment.

The circuitry may be configured to select one of the plurality of user equipment to provide a reference against which one or more other user equipment of the plurality of user equipment are compared.

The circuitry may be configured to select a user equipment of the plurality of user equipment with a largest proportional fair metric to provide the reference.

The circuitry may be configured to compare a first value defined by a quality of service weight and the proportional fair metric of the user equipment providing the reference to a respective value defined by a quality of service weight and a proportional fair metric of a respective user equipment of the plurality of user equipment.

The circuitry may be configured to select a respective user equipment of the plurality of user equipment to be scheduled if that respective user equipment, if not selected, is estimated to have a better time domain metric than that of the user equipment providing the reference.

The circuitry may be configured to select respective user equipment of the plurality of user equipment to be scheduled if that respective user equipment, if not selected, would have a better time domain metric than an average time metric of the selected user equipment of the plurality of user equipment.

The circuitry may be configured to determine a number of scheduling tokens for each of the user equipment which are to be scheduled in the scheduling round based on the respective time domain metric for the respective user equipment and the time domain metrics of all the user equipment which are to be scheduled in the scheduling round.

The apparatus may be provided in or by a base station.

According to a third aspect there is provided an apparatus comprising at least one processor and at least one memory storing instructions that, when executed by the at least one processor cause the apparatus at least to: determine which one or more user equipment of a plurality of user equipment are to be scheduled in a scheduling round, based on an associated quality of service and on a time domain metric associated with a respective user equipment of the plurality of user equipment.

The apparatus may be caused to determine the respective time domain metric for each of the plurality of user equipment.

The time domain metric for the respective user equipment may be based on a proportional fair metric.

The proportional fair metric for the respective user equipment may be based on an instantaneous throughput for the respective user equipment and an average throughput for the respective user equipment.

The time domain metric for the respective user equipment may be based on a sum of scheduling weights associated with all bearers of that respective user equipment.

The time domain metric for the respective user equipment may be based on the sum of scheduling weights associated with the bearers of that respective user equipment, the instantaneous throughput for the respective user equipment, and the average throughput for the respective user equipment.

The apparatus may be caused to select one of the plurality of user equipment to provide a reference against which one or more other user equipment of the plurality of user equipment are compared.

The apparatus may be caused to select a user equipment of the plurality of user equipment with a largest proportional fair metric to provide the reference.

The apparatus may be caused to compare a first value defined by a quality of service weight and the proportional fair metric of the user equipment providing the reference to a respective value defined by a quality of service weight and a proportional fair metric of a respective user equipment of the plurality of user equipment.

The apparatus may be caused to select a respective user equipment of the plurality of user equipment to be scheduled if that respective user equipment, if not selected, is estimated to have a better time domain metric than that of the user equipment providing the reference.

The apparatus may be caused to select respective user equipment of the plurality of user equipment to be scheduled if that respective user equipment, if not selected, would have a better time domain metric than an average time metric of the selected user equipment of the plurality of user equipment.

The apparatus may be caused to determine a number of scheduling tokens for each of the user equipment which are to be scheduled in the scheduling round based on the respective time domain metric for the respective user equipment and the time domain metrics of all the user equipment which are to be scheduled in the scheduling round.

The apparatus may be provided in or by a base station.

According to a fourth aspect there is provided a method comprising: determining which one or more user equipment of a plurality of user equipment are to be scheduled in a scheduling round, based on an associated quality of service and on a time domain metric associated with a respective user equipment of the plurality of user equipment.

The method may comprise determining the respective time domain metric for each of the plurality of user equipment.

The time domain metric for the respective user equipment may be based on a proportional fair metric.

The proportional fair metric for the respective user equipment may be based on an instantaneous throughput for the respective user equipment and an average throughput for the respective user equipment.

The time domain metric for the respective user equipment may be based on a sum of scheduling weights associated with all bearers of that respective user equipment.

The time domain metric for the respective user equipment may be based on the sum of scheduling weights associated with the bearers of that respective user equipment, the instantaneous throughput for the respective user equipment, and the average throughput for the respective user equipment.

The method may comprise determining the time domain metric for the respective user equipment using the sum of scheduling weights associated with bearers of that respective user equipment, the instantaneous throughput for the user equipment and the average throughput for the user equipment.

The method may comprise selecting one of the plurality of user equipment to provide a reference against which one or more other user equipment of the plurality of user equipment are compared.

The method may comprise selecting a user equipment of the plurality of user equipment with a largest proportional fair metric to provide the reference.

The method may comprise comparing a first value defined by a quality of service weight and the proportional fair metric of user equipment providing the reference to a respective value defined by a quality of service weight and a proportional fair metric of a respective user equipment of the plurality of user equipment.

The method may comprise selecting a respective user equipment of the plurality of user equipment to be scheduled if that respective user equipment, if not selected, is estimated to have a better time domain metric than that of the user equipment providing the reference.

The method may comprise selecting a respective user equipment of the plurality of user equipment to be scheduled if that respective user equipment, if not selected, would have a better time domain metric than an average time metric of the selected user equipment of the plurality of user equipment.

The method may comprise determining a number of scheduling tokens for each of the user equipment which are to be scheduled in the scheduling round based on the respective time domain metric for the respective user equipment and the time domain metrics of all the user equipment which are to be scheduled in the scheduling round.

The method may be performed by an apparatus. The apparatus may be provided in or by a base station.

According to a further aspect, there is provided a computer program comprising instructions, which when executed by an apparatus, cause the apparatus to perform any of the methods set out previously.

According to a further aspect, there is provided a computer program comprising instructions, which when executed cause any of the methods set out previously to be performed.

According to an aspect there is provided a computer program comprising computer executable code which when cause any of the methods set out previously to be performed.

According to an aspect, there is provided a computer readable medium comprising program instructions stored thereon for performing at least one of the above methods.

According to an aspect, there is provided a non-transitory computer readable medium comprising program instructions which when executed by the apparatus, cause the apparatus to perform any of the methods set out previously.

According to an aspect, there is provided a non-transitory computer readable medium comprising program instructions which when executed cause any of the methods set out previously to be performed.

According to an aspect, there is provided a non-volatile tangible memory medium comprising program instructions stored thereon for performing at least one of the above methods.

In the above, many different aspects have been described. It should be appreciated that further aspects may be provided by the combination of any two or more of the aspects described above.

Various other aspects are also described in the following detailed description and in the attached claims.

Brief Description of the Figures

Some example embodiments will now be described, by way of example only, with reference to the accompanying Figures in which:

Figure 1 shows a schematic representation of a 5G system;
Figure 2 shows a schematic representation of an apparatus;
Figure 3 shows a schematic representation of a user equipment;
Figure 4 shows a schematic representation of how a quality of service QoS profile is made available to the RNA;
Figure 5 shows a table of sample 5QI profiles and their corresponding requirements, including 5QI weights;
Figure 6 shows a method of some embodiments.
Figure 7a and 7b shows another method of some embodiments.
Figure 8 shows average PRB allocation for each LTE in an example simulation;
Figure 9 shows average weighted PF of each UE for each UE in the example simulation;
Figure 10 shows cell throughput in the example simulation;
Figure 11 shows a method of some embodiments;
Figure 12 shows a schematic representation of a non-volatile memory medium storing instructions which when executed by a processor allow a processor to perform one or more of the steps of any of the methods of Figures 6, 7a, 7b or 11

Detailed Description of the Figures

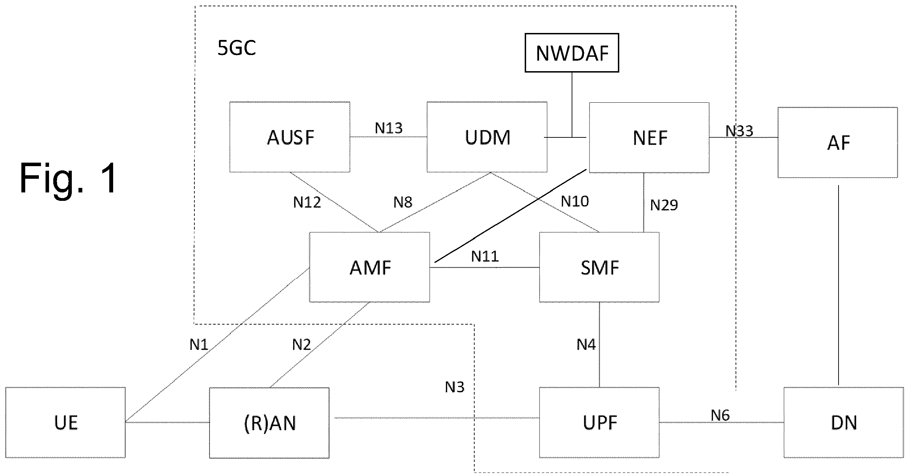

In the following certain embodiments are explained with reference to mobile communication devices capable of communication via a wireless cellular system and mobile communication systems serving such mobile communication devices. Before explaining in detail the exemplifying embodiments, certain general principles of a wireless communication system, access systems thereof, and mobile communication devices are briefly explained with reference to Figures 1, 2 and 3 to assist in understanding the technology underlying the described examples.

Figure 1 shows a schematic representation of a 5G system (5GS). The 5GS may comprises a user equipment (UE), a (radio) access network ((R)AN), a 5G core network (5GC), one or more application functions (AF) and one or more data networks (DN).

The 5G (R)AN may comprise one or more gNodeB (gNB) distributed unit functions connected to one or more gNodeB (gNB) centralized unit functions.

The 5GC may comprise an access and mobility management function (AMF), a session management function (SMF), an authentication server function (AUSF), a user data management (UDM), a user plane function (UPF) a network data analytics function (NWDAF) and/or a network exposure function (NEF).

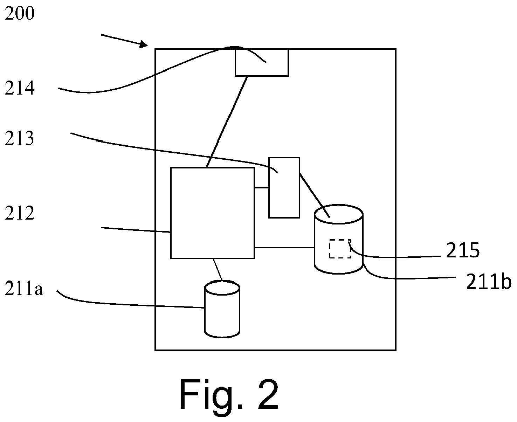

Figure 2 illustrates an example of an apparatus 200. The apparatus may be provided in an access point. The access point may be a base station. The base station may be a gNB. The apparatus may have at least one processor and at least one memory storing instructions that, when executed by the at least one processor cause one or more functions to be performed. In this example, the apparatus may comprise at least one random access memory (RAM) 211a, and/or at least one read only memory (ROM) 211b, and/or at least one processor 212, 213 and/or an input/output interface 214. The at least one processor 212, 213 may be coupled to the RAM 211a and the ROM 211b. The at least one processor 212, 213 may be configured to execute an appropriate software code 215. The software code 215 may for example allow to perform one or more steps to perform one or more of the present aspects.

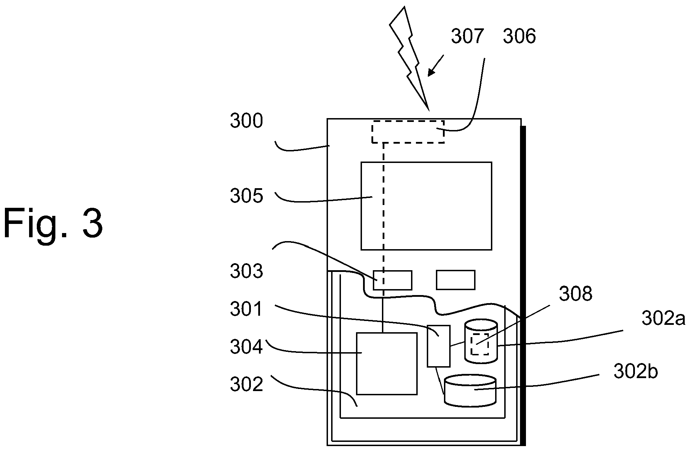

Figure 3 illustrates an example of a communications device 300, such as the UE illustrated on Figure 1. The communications device 300 may be provided by any device capable of sending and receiving radio signals. Non-limiting examples comprise a user equipment, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, a Cellular Internet of things (CIoT) device or any combinations of these or the like. The communications device 300 may provide, for example, communication of data for carrying communications. The communications may be one or more of voice, electronic mail (email), text message, multimedia, data, machine data and so on.

The communications device 300 may receive signals over an air or radio interface 307 via appropriate apparatus for receiving and may transmit signals via appropriate apparatus for transmitting radio signals. In Figure 3 transceiver apparatus is designated schematically by block 306. The transceiver apparatus 306 may be provided for example by means of a radio part and associated antenna arrangement. The antenna arrangement may be arranged internally or externally to the mobile device.

The communications device 300 may be provided with at least one processor 301, and/or at least one memory ROM 302a, and/or at least one RAM 302b and/or other possible components 303 for use in software and hardware aided execution of tasks it is designed to perform, including control of access to and communications with access systems and other communication devices. The at least one processor 301 is coupled to the RAM 302b and the ROM 302a. The at least one processor 301 may be configured to execute an appropriate software code 308. The software code 308 may for example allow to perform one or more of the present aspects. The software code 308 may be stored in the ROM 302a.

The processor, storage and other relevant control apparatus can be provided on an appropriate circuit board and/or in chipsets. This feature is denoted by reference 304.

The communications device may optionally have a user interface such as keypad 305, touch sensitive screen or pad, combinations thereof or the like. Optionally one or more of a display, a speaker and a microphone may be provided depending on the type of the communications device.

In the following examples, the term UE or user equipment. This term encompasses any of the example of communication device such as previously discussed and/or any other communication device requiring scheduling by an access point.

Network Slices are logical entities which are split on the resource level to provide an end-to-end service. Each network slice connects to different network function optimizations. Network slices may be set up either to serve different sets of use cases or to serve the same service but for different set of users. For example a UE may have a first network slice between the UE and a UPF for enhanced mobile broadband (eMBB) and a second network slice between the UE and a different UPF for ultra-reliable low latency communications (URLLC). The respective network slices are from the UE to the respective UPF via the access node (gNodeB in this example).

5GS supports user access to one or more applications. When, a user requests an application (service), the network maps to a slice fulfilling application SLA (service level agreement). The user service is mapped to a corresponding slice and this mapping is done as part of the URSP (UE Route Selection Policy) rules in a UE.

Some embodiments support QoS (quality of service) differentiation across flows and /or UEs. Network slicing may provide service differentiation across slices.

One approach QoS differentiation and slicing-aware scheduling is to use QoS weights. These weights may be QCI (QoS Class Identifier) weights, 5QI (5G QoS Identifier weights) and/or slice-specific weights.

There are challenges, for example when the dynamic range of these QoS weights is large, to achieve a desired resource allocation ratio.

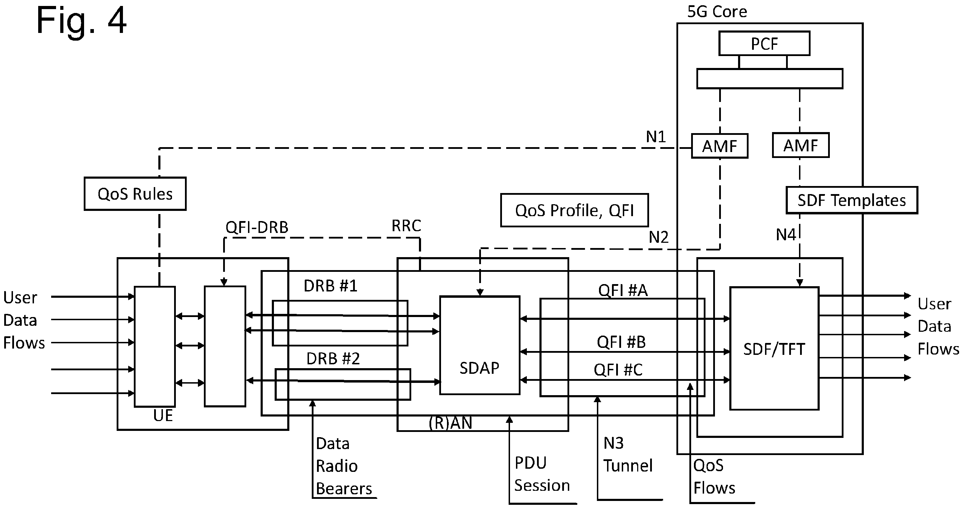

Reference is made to Figure 4 which schematically shows how QoS profile is made available to the RAN,

QoS rules may be provided to the UE from the AMF. This may be via the N1 interface which is between the AMF and the UE and is shown in Figure 1. The QoS profile and/or the QoS Flow ID (QFI) may be provided to a SDAP (service data adaption protocol) in the (R)AN from the AMF. This may be via the N2 interface which is between the AMF and the (R)AN and is shown in Figure 1.

The SMF may provide an SDF (service data flow) template to the UPF. In particular the SDF template may be provided to a SDF/TFT (traffic flow template) function of the UPF. This may be via the N4 interface which is between the SMF and the UPF and is shown in Figure 1.

A PDU (packet data unit) session is provided between the UPF and the UE via the (R)AN. There is an N3 tunnel with 3 QoS flows, in this example, QFI #A, QFI #B, and QFI #C. The N3 tunnel is between the UPF and R(AN) and is shown in Figure 1.

Data radio bearers (DRB) are provided between the UEs and the R(AN). In this example, there are two DRBs - DRB#1 and DRB#2.

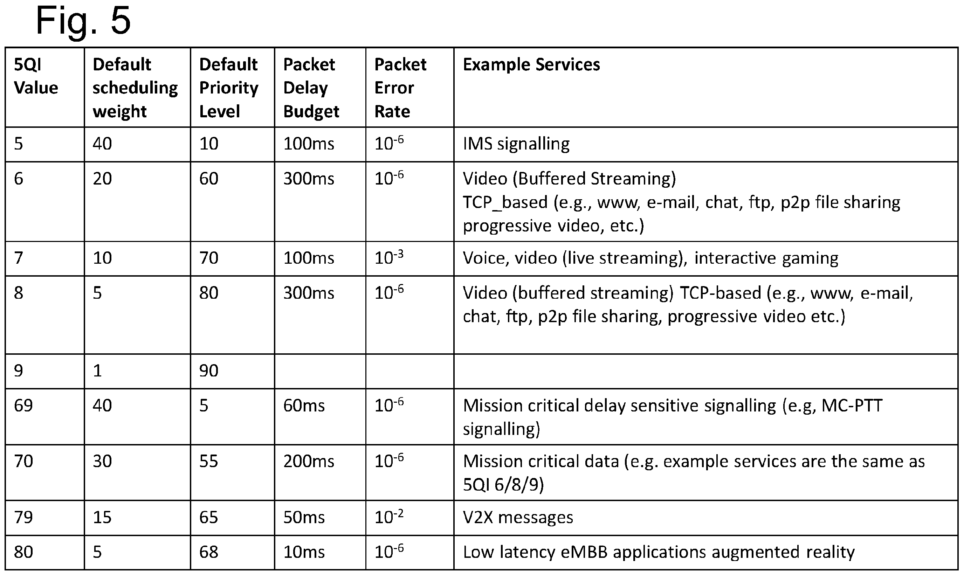

In 5G 'QoS Flow' is currently the finest granularity of QoS differentiation in a PDU session. QoS flows are identified by a QoS Flow ID (QFI). In gNB DRB profiles are defined per 5QI and 5QIs are assigned to QFI by the 5GC, as shown in Figure 4. The scheduling weights for a given 5QI can be configured by the operators through a DRB Profile. Reference is made to the table shown in Figure 5 which shows some examples of 5QI profiles and their corresponding requirements, including 5QI weights.

In this example the 5QI range is only 1-40. However, use cases with a much larger dynamic range may need to be supported. For example, some use cases may require a range 1-1000 for the default scheduling weight. The range of 1-1000 is by way of example only and the range of some embodiments may be larger or smaller than this example range.

Some embodiments relate to QoS differentiation between non-GBR (non-guaranteed bit rate) DRBs based on configurable scheduling weights at the (R)AN, for example a gNB. A scheduler in the gNB allocates resources (PRBs/RBGs - physical resource blocks/resource block groups) in proportion to the scheduling weights.

Resource allocation may be based on a WRR (weighted round robin) mechanism where scheduling tokens are calculated as ratio of scheduling weights of users that are being scheduled in a current round.

Consider the following example - UE0 has a scheduling weight of 20, LTE1 has a scheduling weight of 40, LTE2 has a scheduling weight of 80, LTE3 has a scheduling weight of 60. The number of scheduling tokens is based on the relative scheduling weights. In this example, one RBG is allocated in each round. However, it should be noted that any other resource may alternatively be allocated. So in the following example:

UE0 needs 4 RBGs and has 1 scheduling token
UE1 needs 5 RBGs and has 2 scheduling tokens
UE2 needs 7 RBGs and has 4 scheduling tokens
UE3 needs 3 RBGs and has 3 scheduling tokens

The WRR mechanism makes a determination for each round as to which UE is to be allocated in that round.

The RBGs are allocated in multiple rounds until all the RBGs are exhausted. In each round, 1 RBG is assigned to an eligible user (that is a user who still needs one or more RBGs and has one or more tokens).

Round 1- The allocation of FD (frequency domain) resources starts from the UE with the high scheduling weight (or tokens). In this case UE2, which has the highest scheduling weight as it has 4 scheduling tokens, gets the first RBG and one token is deducted from the initial 4 leaving 3 tokens.

Rounds 2-4 - The same procedure is repeated for the next UEs in descending order of scheduling weight. LTE3, with 3 scheduling tokens is allocated an RBG in round 2. LTE 1 with 2 scheduling tokens is allocated an RBG in round 3. UE0 with 1 scheduling token is allocated an RBG in round 4.

In round 4of the WRR, UE0 used its only token to receive a RBG.

After the first 4 rounds:

UE0 needs 3 RBGs and has 0 scheduling token
UE1 needs 4 RBGs and has 1 scheduling tokens
UE2 needs 6 RBGs and has 3 scheduling tokens
UE3 needs 2 RBGs and has 2 scheduling tokens

As UE0 has no scheduling tokens, the WRR algorithm will ignore this UE in the next rounds.

Rounds 5 to 7 - Once again the same procedure is repeated for the next UEs in descending order of scheduling weight. UE2, with 3 scheduling tokens is allocated an RBG in round 5. UE3 with 2 scheduling tokens is allocated an RBG in round 6. UE1 with 1 scheduling token is allocated an RBG in round 7.

After the first 7 rounds

UE0 needs 3 RBGs and has 0 scheduling token
UE1 needs 3 RBGs and has 0 scheduling tokens
UE2 needs 5 RBGs and has 2 scheduling tokens
UE3 needs 1 RBGs and has 1 scheduling tokens

As UE0 and UE1 have no scheduling tokens, the WRR algorithm will ignore these UEs in the next rounds.

Rounds 8 - 10 - Once again the same procedure is repeated for the next UEs in descending order of scheduling weight. UE2, with 2 scheduling tokens is allocated an RBG in round 8. LTE3 with 1 scheduling tokens is allocated an RBG in round 9. In round 9, LTE 3 was allocated the last needed RBG so the WRR algorithm will no longer take this LTE into account. LTE2 with 1 scheduling token is allocated an RBG in round 10.

After the first 10 rounds
UE0 needs 3 RBGs and has 0 scheduling token
UE1 needs 3 RBGs and has 0 scheduling tokens
UE2 needs 3 RBGs and has 0 scheduling tokens
UE3 needs 0 RBGs and has 0 scheduling tokens

As can be seen, after round 10, UE0, UE1, and UE2 are all out of scheduling tokens. UE3 has been allocated all the RBGs that it needs. The WRR algorithm will restore the scheduling tokens for LTE0, LTE1, and LTE2 - as shown below

UE0 needs 3 RBGs and has 1 scheduling token
UE1 needs 3 RBGs and has 2 scheduling tokens
UE2 needs 3 RBGs and has 4 scheduling tokens
UE3 needs 0 RBGs and has 0 scheduling tokens

Rounds 11- 16- Once again the same procedure is repeated for the next UEs in descending order of scheduling weight. UE2, with 4 scheduling tokens is allocated an RBG in round 11. LTE1 with 2 scheduling tokens is allocated an RBG in round 12. UE0 with 1 scheduling token is allocated an RBG in round 13. UE2, now with 3 scheduling tokens is allocated an RBG in round 14. LTE1 with 1 scheduling tokens is allocated an RBG in round 15. LTE2 with 2 scheduling tokens is allocated an RBG in round 16.

After 16 rounds

UE0 needs 2 RBGs and has 0 scheduling token
UE1 needs 1 RBGs and has 0 scheduling tokens
UE2 needs 0 RBGs and has 1 scheduling tokens
UE3 needs 0 RBGs and has 0 scheduling tokens

As can be seen, after round 16, UE0 and UE1 are all out of scheduling tokens. UE2 and UE3 have been allocated all the RBGs that they needs. The WRR algorithm will restore the scheduling tokens for LTE0 and LTE1 - as shown below

UE0 needs 2 RBGs and has 1 scheduling token
UE1 needs 1 RBGs and has 2 scheduling tokens
UE2 needs 0 RBGs and has 0 scheduling tokens
UE3 needs 0 RBGs and has 0 scheduling tokens

Round 17 and 18 - LTE1 with 2 scheduling tokens is allocated an RBG in round 17. UE0 with 1 scheduling tokens is allocated an RBG in round 18. In this example, the WRR algorithm ends as there is no more available rounds for allocation.

The WRR algorithm runs until all the UEs have been allocated all their requested RBGs (or other resource) or until all the resources (RBGs in this example) are used up. The WRR algorithm starts from the UE with the high scheduling weight (or tokens) and is repeated in descending order of scheduling weight. When a UE has received all the needed RBGs (or other resource) it is removed from consideration for allocation of a resource in a round. When none of the UEs which still need RBGs (or other resource) have any scheduling tokens, the original number of scheduling tokens are restored to the UEs which still need RBGs (or other resource) and the algorithm is repeated.

Some embodiments may provide a time-domain and frequency-domain scheduling and resource allocation method that provides resource allocation which is roughly in proportion to QoS or 5QI weights when a large dynamic range of QoS or 5QI weights is set. Some embodiments may support a number of UEs with a large range of 5QI weights active simultaneously in the same cell.

This may be used to support a larger 5QI weight for Stand-alone (SA) UEs when compared to non-stand-alone (NSA) UEs.

In some embodiments, a determination is made as to which UEs should be scheduled in a given round based on the extent of discrepancy in the long-run desired resource allocation ratio to the currently prevailing resource allocation ratio. A PF (proportional fair) metric may be used. The PF metric may be used to balance the requirements to maximize throughput across all users while at the same time allowing all users at least a minimal level of service. The PF metric may attempt to capitalize on the instantaneous channel condition fluctuations.

In some embodiments a particular UE is selected for scheduling in the TD (time domain) scheduler only if it is estimated that, by not picking the UE, at the end of the slot, the UE would have a better TD metric than the highest TD metric UE of the current slot after accounting for the resources allocated to that UE.

In another embodiment, a particular UE is selected for scheduling in the TD scheduler only if it is estimated that, by not picking the UE, at the end of the slot, the UE would have a better TD metric than the average TD metric of the selected UEs in the current slot, after accounting for resources allocated to those UEs.

The WRR algorithms distribute resources at slot level to achieve QoS differentiation. However, issues may arise if the resources in frequency domain (PRBs/RBGs) are limited. Some embodiments may provide a mechanism which allocates resources in proportion to scheduling weights in the time domain. Some embodiments may use a "weighted PF metric" of users to determining resource allocation.

In some embodiments, weighted PF metrics may be used as the weights for the WRR algorithm. This may provide a desired QoS differentiation. For example, this may provide a desired QoS differentiation for example when there is a relatively large range of 5QI values.

In some embodiments, a number of PRBs allocated to a user are in proportion to TD metrics of the users, which also takes into account scheduling weights. With the use of TD metrics, PRB allocation may be governed by the channel conditions and average throughput of users. This may be in addition to the 5QI scheduling weights.

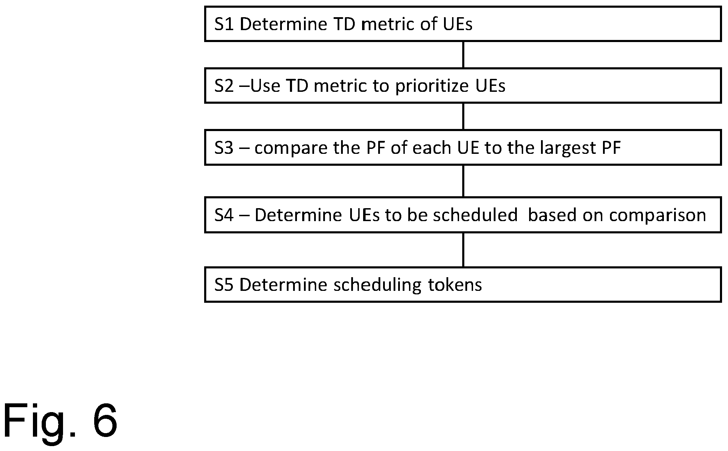

Reference is made to Figure 6 which illustrates a method of some embodiments to determine PRB allocation in proportion to scheduling weights. The method may in some embodiments be provided by an algorithm.

In S1, the TD metric is determined for each user.

In some embodiments, the TD metric may be determined based on the PF metric of each user and the sum of scheduling weights of all DRBs in that LTE.

By way of example only, determination may be based on the

PF metric of each user * sum of scheduling weights of all DRBs in that LTE.

For example, the TD metric may be determined as set out below:

$$TD_{metric} = PF_{non-GBR} * \sum schedule\_weights$$

*where*

$$PF_{non-GBR} = \frac{R\_inst}{R\_avg}$$

where:

Instantaneous throughput R_inst is the throughput which can be achieved on a carrier using all PRBs (or other resource). This may be determined using MCS (modulation and coding scheme) from link adaptation, and rank information. For example, using the MCS, the spectral efficiency can be determined. By way of example only reference is made to TS 38.214 - Table 5.1.3.1-2: which shows a MCS index table 2 for PDSCH. This table provides a target code rate and a spectral efficiency. The spectral efficiency may be multiplied by rank and total bandwidth to give the instantaneous throughput.

Average Throughput R_avg: this may be determined by IIR (infinite impulse response) filtered throughput based on past PRB assignments of the user.

In S2, the determined TD metric is used to prioritize users in the TD scheduler.

For example, a set of candidate users or UEs for scheduling are sorted into a list. The users may be sorted in descending order of their cumulative TD metric across all bearers of the UEs. The determined TD metric is used to prioritize users in TD scheduler. Where the UE has two or more bearers/DRBs, the sum of the scheduling weights of all DRBs (different DRBs may have the same or different scheduling weights) is multiplied with PF metric. Once there is single TD metric for each user, the users are sorted. For example, the users are sorted in descending order of TD metric.

In S3, the PF metric of each UE (UE 1) is compared against that of the UE with the largest PF (UE 2).

In S4, the UEs which are to be scheduled are determined based on this comparison.

For example, the UE is only scheduled when the following condition is satisfied:

$$\frac{w_1 PF_1}{w_2 PF_2} > (1 - \alpha)/(\alpha PF_2 + 1 - \alpha)$$

where:

$PF_1$ is PF metric of UE1
$PF_2$ is PF metric of UE2
$w_1$ is the 5QI weight of UE1
$w_2$ is the 5QI weight of UE2
$\alpha$ is filter constant for $R_{avg}$

An explanation of the derivation of the above condition is discussed later.

If a UE doesn't satisfy above condition, then it is dropped out of the list of users to be scheduled in the current slot. The list of candidate users may have a limit on the total number of users. This limit may be based on HW (hardware), CPU (computer processing unit) and/or performance constraints etc.). The total number of users may vary from round to round. However, in some embodiments, the total number may be fixed.

In S5, the scheduling tokens are determined. The number of scheduling tokens for each UE which is to be scheduled may be determined.

By way of example, the scheduling tokens may be used for WRR allocation of PRBs to final list of users. The WRR algorithm such as described earlier may be used or any other suitable algorithm.

The scheduling tokens may be determined based on the total number of available resources such as RBGs for all the users that need to be scheduled. The scheduling tokens may alternatively or additionally be determined based on the ratio of the TD metric of a user in the final list of users to the total of all the TD metrics of all the users in the final list of users.

The equation below is one example is for token determination for WRR allocation with the TD metric.

$$W_i = round(\#RBGs_{non-GBR} * \frac{TD_{metric}(i)}{\sum_{j \in CS2\ list} TD_{metric}(j)})$$

$$WRR_{token}(i) = \frac{W_i}{\min_{j \in CS2\ list, W_j > 0} W_j}$$

In one modification to the above described method, in S3, the PF metric of each UE (UE 1) is compared against the average PF of the UEs selected for possible scheduling in the current round.

Then in a modification to S4, the UEs which are to be scheduled are determined based on this comparison.

For example, the UE is only scheduled when the following condition is satisfied:

$$\frac{w_1 PF_1}{w_a PF_a} > (1 - x)/(xPF_a + 1 - x)$$

where:

$PF_1$ is PF metric of UE1

$PF_a$ is the average PF metric of UEs selected for scheduling

$w_1$ is the 5QI weight of UF1

$w_a$ is the average 5QI weight of UEs selected for scheduling

$\alpha$ is filter constant for $R_{avg}$

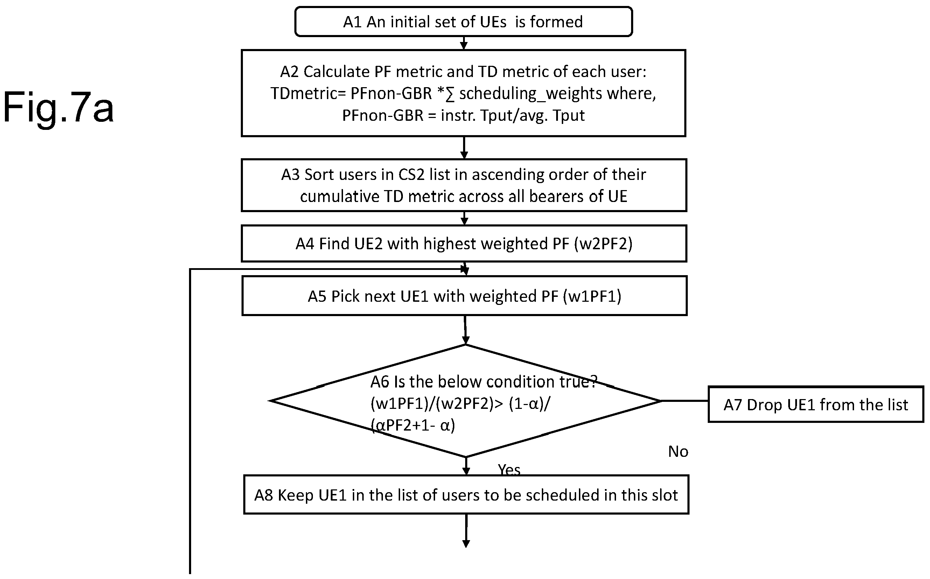

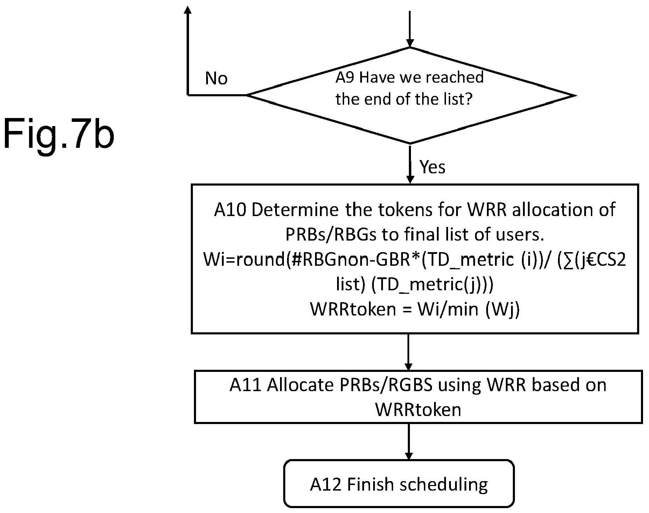

Reference is made to Figure 7a and 7b which shows a method of some embodiments. This method may be performed in the RAN. For example the method may be performed in a base station. Where the method is provided in a 5G system, the method may be performed in a gNB.

In A1, an initial set is formed., The initial set is an initial set of UEs from which the scheduler decides the UEs to be scheduled,

In A2, the PF metric and the TD metric is determined for each user. The TD metric is determined for each UE. In some embodiments, there may be a single metric for each UE irrespective of number of DRBs. This may be determined as discussed previously.

In A3, the users are sorted into the candidate list of UEs for scheduling in order of their cumulative TD metric over all bearers of the UE. This may be in ascending order or descending order. The determination may not result in a sorted list but may provide ranking information for each user or otherwise identify the users with the TD metric indicating that they are candidates to be scheduled. A candidate set of UEs for scheduling may be a subset of the initial set of UEs. In some embodiments, the candidate set of UEs may be the same as the initial set of UEs.

In A4, the UE with the highest weighted PF is determined. This LTE is referred to as LTE2. This metric is referred to as $w_2 PF_2$.

In A5, a UE (this is referred to as UE1) from candidate list is selected. This has a weighted PF of $w_1 PF_1$.

In A6, it is determined if the condition below is satisfied.

$$\frac{w_1 PF_1}{w_2 PF_2} > (1 - \alpha)/(\alpha PF_2 + 1 - \alpha)$$

If not, in A7, that UE1 is dropped from the list. This is followed by A9 which is described later.

If the condition is satisfied, then in A8, that UE1 is kept in the list of users to be scheduled in this slot.

In A9 (see Figure 7b) it is determined in the end of the list has been reached. If not, this is followed by A5 for the next UE1.

If so this is followed by A10, where the tokens for the WRR allocation of PRBs to the final list of users is determined. This may be determined as below:

$$W_i = round(\#RBGs_{non-GBR} * \frac{TD_{metric}(i)}{\sum_{j \in CS2\ list} TD_{metric}(j)})$$

$$WRR_{token}(i) = \frac{W_i}{\min\limits_{j \in CS2\ list, W_j > 0} W_j}$$

In A11, the PRBs or other resources are allocated using the WWR$_{token}$. This may be as previously described.
In A11, the scheduling is ended.
An example of the derivation of the condition to drop UEs before the assigning of PRBs will now be discussed. In the FD scheduler, prior to determining the number of PRBs/RBGs or other resources to be given to a UE, a determination is made if a given UE is eligible to get any RBGs or other resources or not.
Consider an example where UE1 is the UE with a lower scheduler metric under consideration for whether or not it should get any resources and UE2 is the UE with the highest scheduler metric that would need to get scheduled.
UE1 should get scheduled only if UE1, if not scheduled, would end up with a larger metric than UE2, if UE 2 gets all the resources.
If LTE1 does not get scheduled, the $R_{avg,1}$ of UE1 would decay by a factor of $(1-\alpha)$, so the new PF for UE 1 at the end of the slot would be $PF_1/(1 - \alpha)$
For UE2, its new PF would be

$$\frac{w_2 R_{cur,2}}{R_{avg,2} + \Delta R_{avg,2}}$$

where $\Delta R_{avg,2}$ is the increment to the average throughput of UE 2 if it were to get all the resources in that slot.
$\Delta R_{avg,2}$ may be determined as $\alpha(R_{cur,2} - R_{avg,2})$
Therefore UE 1 should be picked for scheduling if

$$\frac{w_1 PF_1}{1-\alpha} > w_2 PF_2 \left( \frac{R_{avg,2}}{R_{avg,2} + \Delta R_{avg,2}} \right),$$

The condition for this can be re-written as

$$\frac{w_1 PF_1/(1-\alpha)}{w_2 PF_2} > \left( \frac{R_{avg,2}}{R_{avg,2} + \Delta R_{avg,2}} \right),$$

where $\Delta R_{avg,2}$ is the increment in throughput that UE 2 would get if it gets all the resources.
Substituting, $\alpha(R_{cur,2} - R_{avg,2})$, which is typically the case, i.e., $R_{cur}$ is the increment in the TBS (transport block size) that the UE would get if it got all the PRBs in a slot, then the above equation can be written as

$$\frac{w_1 PF_1}{w_2 PF_2} > (1 - \alpha)/(\alpha PF_2 + 1 - \alpha).$$

So UE 1 gets resources in the FD scheduler phase only if this condition is satisfied. Otherwise, not.
In this way, each UE (UE 1) gets compared against the UE with the largest PF (UE 2) and either makes it to the scheduled LTE list or not.
Some example simulation results are will now be discussed.
Consider the case where there are 5 UEs with different 5QI weights. These are set out in the table below.

| 5UEs | | Without embodiments | | With embodiments | |
|---|---|---|---|---|---|
| UE-id | Scheduling Weight | Average #PRBs allocated per slot | Ratio of PRB allocation | Average #PRBs allocated per slot | Ratio of PRB allocation |
| 1 | 400 | 51.06 | 4.50 | 104.28 | 433.58 |
| 2 | 200 | 47.27 | 4.16 | 52.06 | 216.45 |
| 3 | 100 | 44.94 | 3.96 | 27.40 | 113.91 |
| 4 | 50 | 43.24 | 3.81 | 13.94 | 57.97 |
| 5 | 1 | 11.35 | 1.00 | 0.24 | 1.00 |

As can be seen the above table, for the simulation without a method of some embodiments, the average number of PRBs allocated per slot in the method is not in proportion to the 5QI weights and the average allocated number PRBs are almost equal for higher 5QI weights of 50, 100, 200, and 400.

In contrast, for the simulation using a method of some embodiments, PRB allocation is proportional to the scheduling weights to a larger extent. Generally the allocation may not exactly be in proportion to the scheduling weights. The PRB allocation being generally proportional to the scheduling weights may be due to the use of the PF metric, which tries to exploit prevailing RF conditions to improve the overall performance, and fluctuating channel conditions of the UEs.

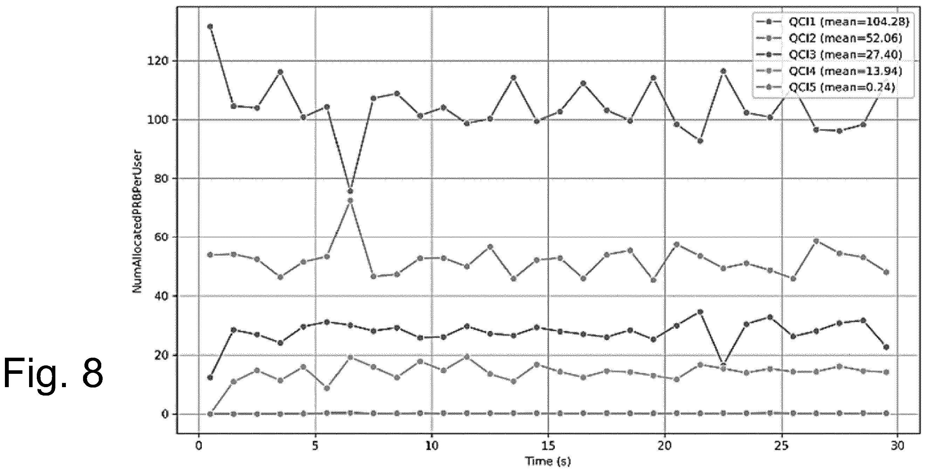

Figure 8 shows the average PRB allocation for each UE when using a method of some embodiments. This shows that the mean is as shown in the table above. The graph shows a number of allocated PRBs against time for each UE.

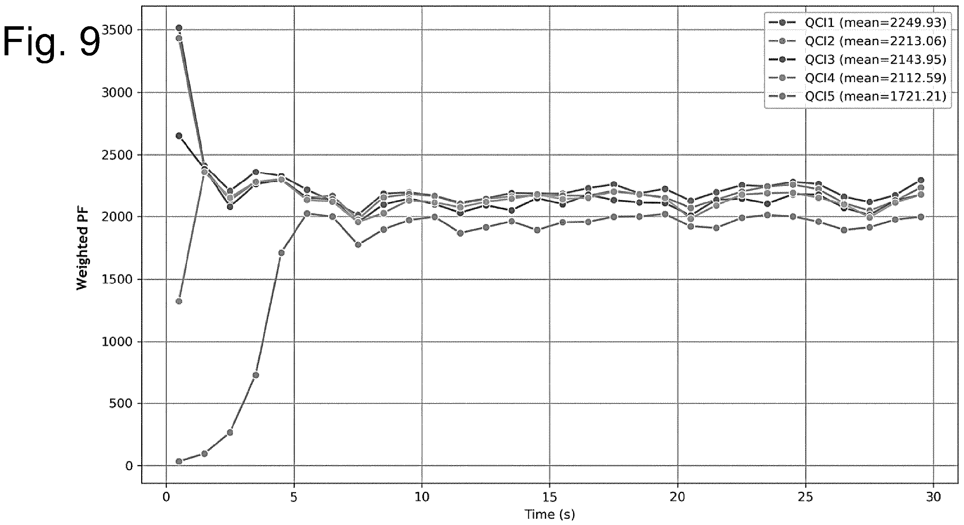

Figure 9 shows that the average weighted PF (TD metric) of the 5 UEs converge in time and this ensures that the ratio of PRB allocation across all 5 UEs is in proportion to their scheduling weights. The graph shows "average weighted PF" of UEs against time for each UE.

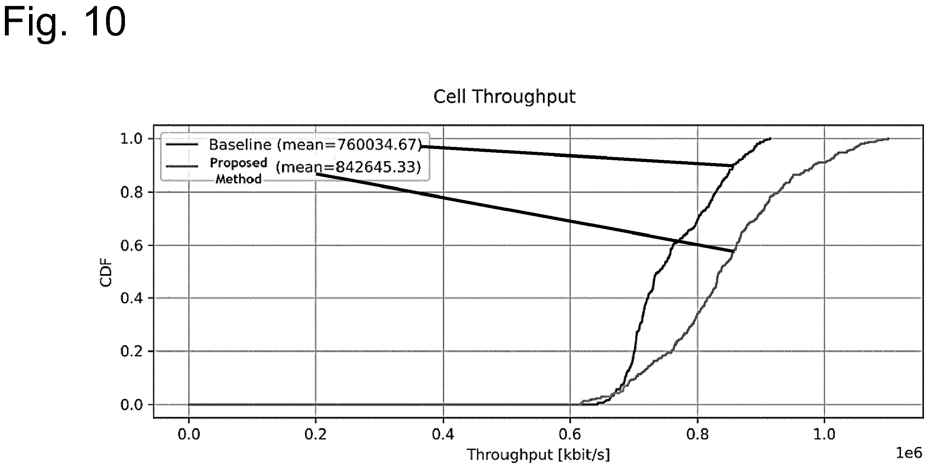

Figure 10 shows a CDF (cumulative distribution function) plot of cell throughput for the WRR algorithm without TD (referred to as the baseline in the graph) and WRR algorithm with TD metric (referred to with TDD in the graph). The cell throughput in the simulation shows an 11% gain in cell throughput when the TD metrics are taken into account. Since the time-domain and frequency domain allocations use the TD metric (weighted PF), the channel condition of the users are factored into the allocation and fairness is ensured over time rather than in each slot, and hence there is an overall gain in cell throughput and peak throughput.

Consider 5 UEs with scheduling weights 1, 50, 100, 200, 400, the sum (751) is greater than max available PRBs (273 RBs) in some embodiments. In addition, because of use of RBGs (16 PRBs) as the minimum granularity of allocation, just using the WRR without the TD metric would provide allocations equal to around 16, 64, 64, 64, 64 which is in ratio 1:4:4:4:4. However, in some embodiments, by using the TD metric to decide which UEs are allocated resources in slots, allocation ratios of around 1:50:100:200:400 may be achieved.

Consider another example of 2 users to be scheduled in a slot, with the first user having a TD metric of 1 and second user with TD metric of 1000, and with both users having same 5QI scheduling weights. When using the WRR without the TD metric where the PRBs are assigned in proportion of scheduling weights, both users will be assigned 50% of PRBs in every slot. However, in some embodiments, by using the TD metric, allocations of around 1:1000 may be achieved.

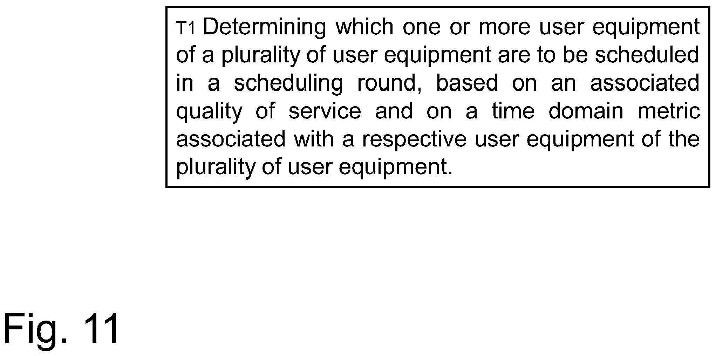

Reference is made to Figure 11 which shows a first method of some embodiments.

This method may be performed by an apparatus. The apparatus may be in or be a base station or other access point.

The apparatus may be comprise suitable circuitry for providing the method.

Alternatively or additionally, the apparatus may comprise at least one processor and at least one memory storing instructions that, when executed by the at least one processor cause the apparatus at least to provide the method below.

Alternatively or additionally, the apparatus may be such as discussed in relation to Figure 2.

The method may be provided by computer program code or computer executable instructions.

The method may comprise as referenced T1, determining which one or more user equipment of a plurality of user equipment are to be scheduled in a scheduling round, based on an associated quality of service and on a time domain metric associated with a respective user equipment of the plurality of user equipment.

It should be appreciated that the method outlined in Figures Figure 11 may be modified to include any of the previously described features.

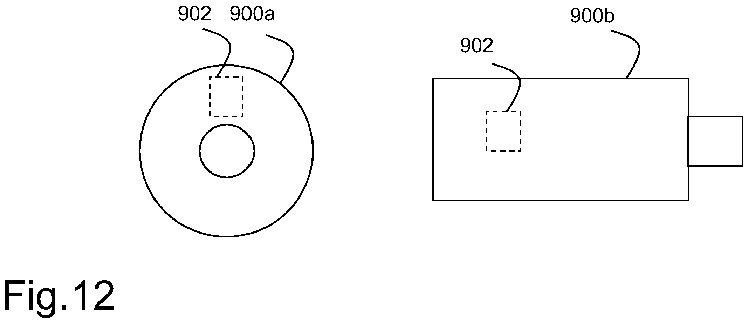

Figure 12 shows a schematic representation of non-volatile memory media 900a or 900b storing instructions and/or parameters which when executed by a processor allow the processor to perform one or more of the steps of the methods of any of the embodiments. The non-volatile memory media may be a computer disc (CD), or digital versatile disc (DVD) schematically referenced 900a or a universal serial bus (USB) memory stick schematically referenced 900b. The computer instructions or code may be downloaded and stored in one or more memories. The memory media may store instructions and/or parameters 902 which when executed by a processor allow the processor to perform one or more of the steps of the methods of embodiments.

Computer program code may be downloaded and stored in one or more memories of the device.

It is noted that while the above describes example embodiments, there are several variations and modifications which may be made to the disclosed solution without departing from the scope of the present invention.

It is noted that whilst some embodiments have been described in relation to 5G networks, similar principles can be applied in relation to standards.

Reference has been made to the allocation of PRBs or RBGs. This is by way of example and other embodiments may be used with the allocation of any other resource.

An example WRR algorithm has been described. It should be appreciated that other embodiments may be used with other round robin algorithms.

It should be appreciated that different weights to the example 5QI weights may be used.

The weights which are used may be dependent on the standard or network in which the embodiment is provided.

Therefore, although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the present invention.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

In general, the various embodiments may be implemented in hardware or special purpose circuitry, software, logic or any combination thereof. Some aspects of the disclosure may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used in this application, the term "circuitry" may refer to one or more or all of the following:

(a) hardware-only circuit implementations (such as implementations in only analog and/or digital circuitry) and
(b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments of this disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The term "non-transitory," as used herein, is a limitation of the medium itself (i.e., tangible, not a signal ) as opposed to a limitation on data storage persistency (e.g., RAM vs. ROM).

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may comprise one or more of general-purpose computers, special purpose computers, microprocessors, digital signal processors (DSPs), application specific integrated circuits (ASIC), FPGA, gate level circuits and processors based on multi core processor architecture, as non-limiting examples.

Embodiments of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The scope of protection sought for various embodiments of the disclosure is set out by the claims. The embodiments and features, if any, described in this specification that do not fall under the scope of the claims are to be interpreted as examples useful for understanding various embodiments of the disclosure.

It should be noted that different claims with differing claim scope may be pursued in related applications such as divisional or continuation applications.

The foregoing description has provided by way of non-limiting examples a full and informative description of the exemplary embodiment of this disclosure. However, various modifications and adaptations may become apparent to those skilled in the relevant arts in view of the foregoing description, when read in conjunction with the accompanying drawings and the appended claims. However, all such and similar modifications of the teachings of this disclosure will still fall within the scope of this invention as defined in the appended claims. Indeed, there is a further embodiment comprising a combination of one or more embodiments with any of the other embodiments previously discussed.

**Claims**

1. Apparatus comprising:
   means for determining which one or more user equipment of a plurality of user equipment are to be scheduled in a scheduling round, based on an associated quality of service and on a time domain metric associated with a respective user equipment of the plurality of user equipment.

2. The apparatus as claimed in claim 1, comprising means for determining the respective time domain metric for each of the plurality of user equipment.

3. The apparatus as claimed in any preceding claim, wherein the time domain metric for the respective user equipment is based on a proportional fair metric.

4. The apparatus as claimed in claim 3, wherein the proportional fair metric for the respective user equipment is based on an instantaneous throughput for the respective user equipment and an average throughput for the respective user equipment.

5. The apparatus as claimed in any preceding claim, wherein the time domain metric for the respective user equipment is based on a sum of scheduling weights associated with all bearers of that respective user equipment.

6. The apparatus as claimed in claim 4 and 5, wherein the time domain metric for the respective user equipment is based on the sum of scheduling weights associated with the bearers of that respective user equipment, the instantaneous throughput for the respective user equipment, and the average throughput for the respective user equipment.

7. The apparatus as claimed in any preceding claim, wherein the means for determining which one or more user equipment of the plurality of user equipment are to be scheduled selects one of the plurality of user equipment to provide a reference against which one or more other user equipment of the plurality of user equipment are compared.

8.  The apparatus as claimed in claim 7, comprising means for selecting a user equipment of the plurality of user equipment with a largest proportional fair metric to provide the reference.

9.  The apparatus as claimed in claim 7 or 8, wherein the means for determining which one or more user equipment of the plurality of user equipment are to be scheduled compare a first value defined by a quality of service weight and the proportional fair metric of the user equipment providing the reference to a respective value defined by a quality of service weight and a proportional fair metric of a respective user equipment of the plurality of user equipment.

10.  The apparatus as claimed in claim 7, wherein the means for determining which one or more user equipment of the plurality of user equipment are to be scheduled selects a respective user equipment of the plurality of user equipment to be scheduled if that respective user equipment, if not selected, is estimated to have a better time domain metric than that of the user equipment providing the reference.

11.  The apparatus as claimed in claim 7, 8 or 9, wherein the means for determining which one or more user equipment of the plurality of user equipment are to be scheduled selects a respective user equipment of the plurality of user equipment to be scheduled if that respective user equipment, if not selected, would have a better time domain metric than an average time metric of the selected user equipment of the plurality of user equipment.

12.  The apparatus as claimed in any preceding claim, comprising means for determining a number of scheduling tokens for each of the user equipment which are to be scheduled in the scheduling round based on the respective time domain metric for the respective user equipment and the time domain metrics of all the user equipment which are to be scheduled in the scheduling round.

13.  A method comprising:
     determining which one or more user equipment of a plurality of user equipment are to be scheduled in a scheduling round, based on an associated quality of service and on a time domain metric associated with a respective user equipment of the plurality of user equipment.

14.  The method as claimed in claim 13, comprising determining the respective time domain metric for each of the plurality of user equipment.

15.  A computer program comprising instructions, which when executed by an apparatus, cause the apparatus to perform the method of any of claims 13 to 14.

Fig. 1

5GC

NWDAF

AUSF — N13 — UDM — NEF — N33 — AF

N12    N8    N10    N29

AMF — N11 — SMF

N1    N2    N3    N4

UE — (R)AN — UPF — N6 — DN

Fig. 2

Fig. 3

Fig. 4

EP 4 340 516 A1

# Fig. 5

| 5QI Value | Default scheduling weight | Default Priority Level | Packet Delay Budget | Packet Error Rate | Example Services |
|---|---|---|---|---|---|
| 5 | 40 | 10 | 100ms | $10^{-6}$ | IMS signalling |
| 6 | 20 | 60 | 300ms | $10^{-6}$ | Video (Buffered Streaming) TCP_based (e.g., www, e-mail, chat, ftp, p2p file sharing progressive video, etc.) |
| 7 | 10 | 70 | 100ms | $10^{-3}$ | Voice, video (live streaming), interactive gaming |
| 8 | 5 | 80 | 300ms | $10^{-6}$ | Video (buffered streaming) TCP-based (e.g., www, e-mail, chat, ftp, p2p file sharing, progressive video etc.) |
| 9 | 1 | 90 | | | |
| 69 | 40 | 5 | 60ms | $10^{-6}$ | Mission critical delay sensitive signalling (e.g, MC-PTT signalling) |
| 70 | 30 | 55 | 200ms | $10^{-6}$ | Mission critical data (e.g. example services are the same as 5QI 6/8/9) |
| 79 | 15 | 65 | 50ms | $10^{-2}$ | V2X messages |
| 80 | 5 | 68 | 10ms | $10^{-6}$ | Low latency eMBB applications augmented reality |

EP 4 340 516 A1

S1 Determine TD metric of UEs

S2 –Use TD metric to prioritize UEs

S3 – compare the PF of each UE to the largest PF

S4 – Determine UEs to be scheduled based on comparison

S5 Determine scheduling tokens

Fig. 6

# Fig.7a

A1 An initial set of UEs is formed

A2 Calculate PF metric and TD metric of each user:
TDmetric= PFnon-GBR *∑ scheduling_weights where,
PFnon-GBR = instr. Tput/avg. Tput

A3 Sort users in CS2 list in ascending order of their
cumulative TD metric across all bearers of UE

A4 Find UE2 with highest weighted PF (w2PF2)

A5 Pick next UE1 with weighted PF (w1PF1)

A6 Is the below condition true?
$(w1PF1)/(w2PF2) > (1-\alpha)/(\alpha PF2+1-\alpha)$

A7 Drop UE1 from the list

No

Yes

A8 Keep UE1 in the list of users to be scheduled in this slot

# Fig.7b

A9 Have we reached the end of the list?

No

Yes

A10 Determine the tokens for WRR allocation of PRBs/RBGs to final list of users.
$W_i = round(\#RBGnon\text{-}GBR*(TD\_metric\ (i))/\ (\sum(j \in CS2\ list)\ (TD\_metric(j))))$
$WRRtoken = W_i/min\ (W_j)$

A11 Allocate PRBs/RGBS using WRR based on WRRtoken

A12 Finish scheduling

Fig. 8

Fig. 9

EP 4 340 516 A1

# Fig. 10

Cell Throughput

T1 Determining which one or more user equipment of a plurality of user equipment are to be scheduled in a scheduling round, based on an associated quality of service and on a time domain metric associated with a respective user equipment of the plurality of user equipment.

Fig. 11

Fig.12

Europäisches
Patentamt

European
Patent Office

Office européen
des brevets

# EUROPEAN SEARCH REPORT

Application Number

EP 23 19 4841

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ADESH N D ET AL: "Adaptive downlink packet scheduling in LTE networks based on queue monitoring", WIRELESS NETWORKS, ACM, 2 PENN PLAZA, SUITE 701 - NEW YORK USA, vol. 25, no. 6, 14 March 2018 (2018-03-14), pages 3149-3166, XP036802223, ISSN: 1022-0038, DOI: 10.1007/S11276-018-1708-1 [retrieved on 2018-03-14] * page 2, column 1, lines 45-50 - page 2, column 2, lines 1-10 * * page 3, column 2, lines 20-30 - page 4, column 2, lines 1-10 * * page 5, column 2, lines 1-15 * * page 7, column 1, lines 1-30 - page 7, column 2, lines 1-43; figure 4 * * page 8, column 1, lines 1-20 * * page 11, column 2, lines 10-15 - page 12, column 1, lines 10-30 * * page 12, column 2, lines 1-20 - page 13, column 1, lines 14-39 * * page 13, column 2, lines 1-7 - page 14, column 1, lines 12-30 * * page 14, column 2, lines 1-15 * ----- -/-- | 1-15 | INV. H04W72/543 |
| | | | TECHNICAL FIELDS SEARCHED (IPC) |
| | | | H04W |

The present search report has been drawn up for all claims

| Place of search | Date of completion of the search | Examiner |
|---|---|---|
| The Hague | 20 December 2023 | Ranaivoarison, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 23 19 4841

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CHANNAGIRE ANJALI D ET AL: "Performance Analysis of Long Term Evolution (LTE) Medium Access Control (MAC) Scheduler for Real-Time Heterogeneous Data Traffic", 2019 INTERNATIONAL CONFERENCE ON INTELLIGENT COMPUTING AND CONTROL SYSTEMS (ICCS), IEEE, 15 May 2019 (2019-05-15), pages 1016-1023, XP033755561, DOI: 10.1109/ICCS45141.2019.9065800 [retrieved on 2020-04-13] * page 3, column 2, lines 41-53 - page 5, column 2, line 53 * * page 7, column 2, lines 16-30 * | 1-15 | |
| A | US 2020/351718 A1 (DONG YUEXIN [US] ET AL) 5 November 2020 (2020-11-05) * paragraphs [0020] - [0040], [0054] - [0060] * | 1-15 | |
| A | US 11 438 920 B2 (ERICSSON TELEFON AB L M [SE]) 6 September 2022 (2022-09-06) * paragraphs [0040] - [0080] * | 1-15 | TECHNICAL FIELDS SEARCHED (IPC) |

The present search report has been drawn up for all claims

| Place of search | Date of completion of the search | Examiner |
|---|---|---|
| The Hague | 20 December 2023 | Ranaivoarison, L |

EPO FORM 1503 03.82 (P04C01)

## ANNEX TO THE EUROPEAN SEARCH REPORT
## ON EUROPEAN PATENT APPLICATION NO.

**EP 23 19 4841**

This annex lists the patent family members relating to the patent documents cited in the above-mentioned European search report.
The members are as contained in the European Patent Office EDP file on
The European Patent Office is in no way liable for these particulars which are merely given for the purpose of information.

**20-12-2023**

| Patent document cited in search report | | Publication date | Patent family member(s) | | Publication date |
|---|---|---|---|---|---|
| US 2020351718 | A1 | 05-11-2020 | US 2020351718 | A1 | 05-11-2020 |
| | | | US 2021045016 | A1 | 11-02-2021 |
| US 11438920 | B2 | 06-09-2022 | AR 113606 | A1 | 20-05-2020 |
| | | | CN 111434173 | A | 17-07-2020 |
| | | | EP 3721669 | A1 | 14-10-2020 |
| | | | US 2020396755 | A1 | 17-12-2020 |
| | | | WO 2019110088 | A1 | 13-06-2019 |

EPO FORM P0459

For more details about this annex : see Official Journal of the European Patent Office, No. 12/82